# EUROPEAN PATENT SPECIFICATION

(11) **EP 2 607 221 B1**
(45) Date of publication and mention of the grant of the patent: **25.06.2014**
(21) Application number: 12193437.6
(22) Date of filing: 20.11.2012
(51) Int. Cl.: B62K 19/06, B62K 19/20

(54) **Hollow welded assembled frame structure**
Hohle geschweißte Rahmenstruktur
Structure soudée creuse de cadre assemblé

(30) Priority: 20.12.2011 JP 2011278656
(43) Date of publication of application: 26.06.2013
(73) Proprietor: Honda Motor Co., Ltd., Tokyo 107-8556 (JP)
(72) Inventor: Keisuke, Kishikawa, Wako-shi, Saitama 351-0193 (JP); Hagimoto, Masashi, Wako-shi, Saitama 351-0193 (JP)
(74) Representative: Stevens, Jason Paul

(56) References cited:
- EP-A1- 0 743 124
- JP-A- 11 278 346
- US-A- 3 945 463
- US-A1- 2008 100 029

## Description

The present invention relates to a hollow welded assembled frame structure of a saddle type vehicle.

A hollow welded assembled frame formed from vehicle body frames configured by connecting a plurality of hollow members such as metal pipes by welding is publicly known (for an example, see Japanese Patent No. 4015265).

When a plurality of hollow members are connected to each other by welding, it is necessary to provide an air vent port to allow the air inside the hollow members to communicate with the atmospheric air.

However, if the air vent port is opened directly to the atmosphere and a plurality of air vent ports are provided for each welded portion of the hollow members, then a plurality of air vent ports are evident in the outer appearance of the frame after assembly by welding. This is an obstacle to improvement of the outer appearance. Further, during operation of the vehicle, rainwater or the like is likely to intrude into a hollow portion of the frame through the air vent ports which are open to the atmosphere. If the intruding water advances to the interior of the hollow portion, then it is less likely to discharge.

Furthermore, after assembly by welding, the frame is sometimes coated by dipping. In this case, upon dipping of the frame into liquid paint, the liquid paint can intrude into a hollow member through an air vent port, and therefore, labour for discharging the liquid paint later is required. In particular, if the liquid paint enters the interior of the hollow portion, then much time is required to discharge the paint.

The present invention has been made in view of such circumstances as described above, and it is an object of at least the preferred embodiments of the present invention to provide a hollow welded assembled frame structure which has a reduced number of air vent ports.

According to a first aspect of the present invention, there is provided: a hollow welded assembled frame structure, wherein the frame is the frame of a saddle ride type vehicle, comprising a plurality of hollow tubular members which are integrally assembled by being connected to each other by welding, wherein: said hollow members include at least a first hollow member, a second hollow member and a third hollow member; said first hollow member is closed at one end thereof and has an atmospheric air communicating hole provided at the other end portion so as to allow communication between an internal hollow space and the atmospheric air; said second hollow member is welded at one end thereof to a side face of said first hollow member, such that said second hollow member is abutted with the side face of said first hollow member, and is connected in a communicating state with a first air vent port provided at the region where said first hollow member and said second hollow member are connected, so as to allow the hollow spaces of said first hollow member and said second hollow member to communicate with each other; said third hollow member is closed at both ends thereof, and has a side face to which the other end of said second hollow member is welded, such that said other end of said second hollow member is abutted with the side face of said third hollow member, and is connected in a communicating state with a second air vent port is provided at the region where said second hollow member and said third hollow member are connected, so as to allow the hollow spaces of said third hollow member and said second hollow member to communicate with each other; said first air vent port and said second air vent port are formed as holes which are hidden by the second hollow member welded with the openings abutted therewith so as not to be observed from the outside; and said first air vent port is provided at a position spaced by a predetermined distance from said atmospheric air communicating hole in the lengthwise direction of said first hollow member.

With this arrangement, a single atmospheric air communicating hole is provided at one end of the first hollow member. Further, the first hollow member and the second hollow member are connected to each other in a communicating state by the first air vent port (formed so as at be hidden from view), while the second hollow member and the third hollow member are connected to each other in a communicating state by the second air vent port (which is also formed so as to be hidden from view). Therefore, upon connection of the plural hollow members to each other by welding, when the third hollow member is welded, even though only one atmospheric air communicating hole is provided, air venting can be carried out in the route of the second air vent port → first air vent port → atmospheric air communicating hole.

Consequently, even if a plurality of air vent ports which are required for venting air which expands during welding are provided, the number of those air vent ports which can be seen from the outside can be restricted to only one (the atmospheric air communicating hole). Therefore, the outer appearance can be improved, and further, liquid such as water becomes less likely to intrude.

Specifically, the atmospheric air communicating hole is provided at one end of the first hollow member and the first air vent port is provided at a predetermined distance from the atmospheric air communicating hole in the lengthwise direction of the first hollow member. Therefore, even if liquid intrudes into the first hollow member through the atmospheric air communicating hole, it is less likely to further intrude to the interior from the first air vent port, and discharge of the liquid is easy.

Preferably, said hollow welded assembled frame structure includes a main frame which extends rearwardly from an upper portion of a head pipe as viewed in side elevation of a saddle type vehicle in which said frame structure is used; said main frame includes an upper frame and a lower frame provided in a vertically spaced relationship from each other, and a plurality of reinforcing frames each formed from a hollow member and connecting said upper frame and lower frames to each other; said lower frame serves as the first hollow member and has the atmospheric air communicating hole provided at a lower end portion thereof; said upper frame serves as the third hollow member; said first reinforcing frame which is positioned nearest to said head pipe from among the reinforcing frames serves as the second hollow member; said lower frame and said first reinforcing frame are connected in a communicating state with each other through said first air vent port; and said upper frame and said first reinforcing frame are connected in a communicating state with each other through said second air vent port.

Thus, the main frame for a saddle type vehicle is configured from the upper frame, lower frame and reinforcing frames for connecting the upper frame and lower frames to each other, all of which are hollow members connected to each other by welding. The upper frame, lower frame and reinforcing frames correspond to the third hollow member, first hollow member and second hollow members, and the atmospheric air communicating hole is provided only at the lower end of the lower frame. Therefore, air venting upon assembly by welding can be carried out through the atmospheric air communicating hole, and the number of air vent ports which can be seen from the outside can be reduced as far as possible, and consequently, the outer appearance of the main frame can be improved. Besides, intrusion of water into the hollow frames during use of the vehicle can be prevented.

In a further preferred form, said reinforcing frames include a second reinforcing frame which is disposed rearwardly of said first reinforcing frame, is connected at one end thereof to said lower frame in a non-communicating state between said atmospheric air communicating hole and said first air vent port, and is connected at the other end thereof to said upper frame in a communicating state.

With this arrangement, even if liquid intrudes into the lower frame through the atmospheric air communicating hole, the liquid cannot intrude to the second reinforcing frame side.

Further, since the first air vent port is spaced from the atmospheric air communicating hole, liquid is less likely to reach the first air vent port. Consequently, liquid is less likely to further intrude to the interior from the first air vent port, and discharge of the liquid is facilitated.

Further, upon welding, expanding air can be vented in the route of the second reinforcing frame → upper frame → first reinforcing frame → lower frame → atmospheric air communicating hole.

Preferably, said reinforcing frames include a third reinforcing frame and a fourth reinforcing frame which are disposed rearwardly of said first reinforcing frame, the third reinforcing frame and fourth reinforcing frame being connected at respective first ends thereof to said lower frame in a non-communicating state between said atmospheric air communicating hole and said first air vent port, and said third reinforcing frame and said fourth reinforcing frame being connected at respective second ends thereof to each other in a communicating state, and further connected to said upper frame in a communicating state through a fifth hollow member, which is a different hollow member.

With this arrangement, liquid intrusion to the third and fourth reinforcing frames side is less likely to occur, and upon welding, expanding air can be vented along the route of the third or fourth reinforcing frame → fifth reinforcing frame → upper frame → first reinforcing frame → lower frame → atmospheric air communicating hole.

Preferably, a lower end portion of said lower frame is connected to an engine hanger of a cylindrical shape extending laterally, and said atmospheric air communicating hole is formed in a cylindrical portion of said engine hanger.

Thus, the end portion opening of the lower frame is closed by the engine hanger, which is in the form of a cylindrical member, and the atmospheric air communicating hole can be provided by forming a through-hole in a tubular portion of the engine hanger. Therefore, the atmospheric air communicating hole can be formed readily, and the workability is improved.

Preferably, a pair of left and right main frames are provided and connected to and integrated by said head pipe and are connected to each other in a non-communicating state, and each of said left and right main frames includes a said atmospheric air communicating hole.

Thus, one atmospheric air communicating hole is provided each of the left and right main frames, and the left and right main frames are integrated with each other by connection thereof to each other by the head pipe, but in a non-communicating state. Therefore, intrusion of liquid from one of the main frames to the other main frame can be blocked.

In a further preferred form, the hollow welded assembled frame includes hollow cross members extending in the lateral direction, for connecting said paired left and right main frames to each other, and said cross members are connected at one end thereof in a communicating state and are connected at the other end thereof in a non-communicating state to said paired left and right main frames.

With this arrangement, the left and right main frames are connected to each other for reinforcement by the cross members, each of which is formed as a hollow member. Each cross member is connected at one end thereof in a communicating state to one of the main frames and at the other end thereof in a non-communicating state to the other main frame. Consequently, the left and right main frames can be placed in a non-communicating state with each other, and air can be vented upon welding of the cross members through only one of the main frames. In addition, the number of through-holes to be formed in the main frames can be reduced to assure the strength.

In a further preferred form, said cross members include a first cross member and a second cross member vertically spaced from each other; said first cross member connects the left and right lower frames to each other; and said second cross member connects the left and right upper frames to each other.

Thus, the first and second cross members are provided such that they connect the left and right main frames to each other in a non-communicating state. Consequently, intrusion of liquid from one of the left and right frames to the other can be blocked, and the number of through-holes to be formed in the main frames can be reduced to assure the strength.

Preferably, said hollow welded assembled frame structure is coated by dipping the same into liquid paint after assembly by welding thereof; during the painting, said first hollow member is disposed above a liquid surface of the paint such that a lengthwise direction thereof is directed in a generally vertical direction; and in this state, said atmospheric air communicating hole is open generally downwardly at a lower end portion thereof while said first air vent port is provided so as to be positioned on an upper end portion side.

When the assembled frame is to be dipped into liquid paint to carry out coating, the first hollow member is disposed above the liquid surface of the fluid paint such that it is generally vertical. Then, in this state, the atmospheric air communicating hole is open downwardly at the lower end portion thereof while the first air vent port is positioned on the upper end portion side. Therefore, since the atmospheric air communicating hole is provided at only one place, and further is located at the lower end portion of the first hollow member, the liquid paint is less likely to intrude into the hollow portions of the frame through the atmospheric air communicating hole when the frame is dipped into the liquid paint. Further, since the first air vent port is provided on the upper end portion side, even if the liquid paint intrudes to the lower end portion side of the first hollow member, it is less likely to reach the first air vent port. Consequently, the liquid paint is less likely to intrude to the hollow portions of the second hollow member and the third hollow member. Moreover, if the frame is pulled up from within the liquid paint, the intruding liquid paint can be discharged quickly through the atmospheric air communicating hole by means of gravity.

A preferred embodiment of the invention will now be described by way of example only and with reference to the accompanying drawings, in which:
Fig. 1 is a left side elevational view of part of a motorcycle to which the present invention is applied;
Fig. 2 is a left side elevational view of a main frame;
Fig. 3 is a front elevational view of the main frame;
Fig. 4 is a rear elevational view of the main frame;
Fig. 5 is an explanatory view showing connection portions of the main frame in cross section;
Fig. 6 is a perspective view of a first engine hanger and neighbouring elements showing an atmospheric air communicating hole portion; and
Fig. 7 is a view illustrating a coating step of a front frame assembly.

An embodiment will now be described where an embodiment of the present invention is applied to a vehicle body frame of a motorcycle (as an example of a saddle type vehicle). It is to be noted that, in the present application, the directions up, down, left, right, forward and backward as applied to the frame are with reference to a vehicle in which the frame is used. Further, when necessary, the forward direction is indicated by an arrow mark F, the upward direction is indicated by an arrow mark UP, and the leftward direction is indicated by an arrow mark LH in the Figures.

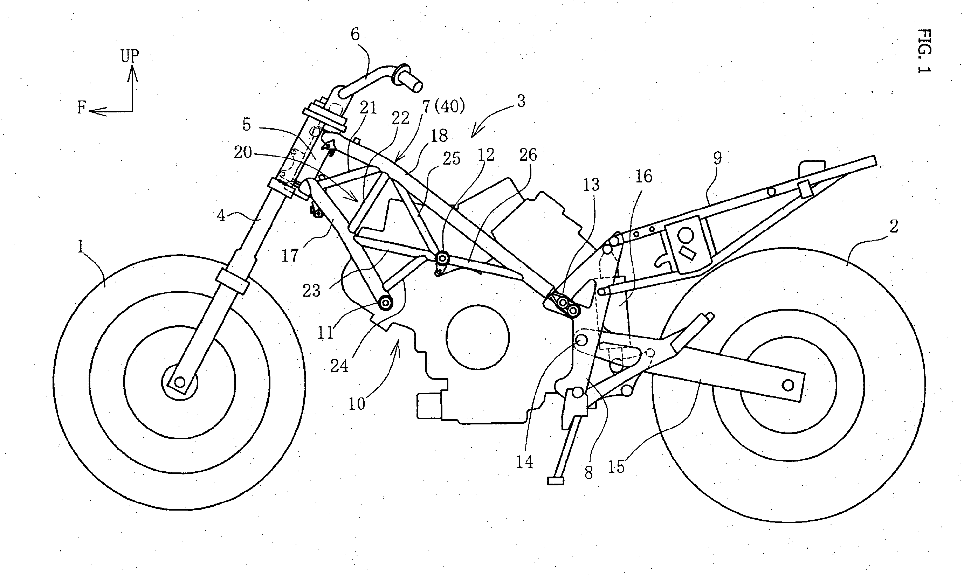

Fig. 1 is a side elevational view of part of a motorcycle in which an embodiment of a pipe frame according to the present invention is used. The motorcycle includes a vehicle body frame 3 which supports a front wheel 1 and a rear wheel 2 at front and rear portions thereof, respectively.

The front wheel 1 is supported at the lower ends of a pair of left and right front forks 4, and the front forks 4 are supported at an upper end thereof for pivotal motion on a head pipe 5 provided at a front end of the vehicle body frame 3, such that the front wheel 1 can be steered by a handlebar 6.

The vehicle body frame 3 includes a pair of left and right main frames 7, a pair of left and right pivot frames 8 and a pair of left and right seat rails 9. The pivot frames 8 are connected to rear ends of the main frames 7 and extend in the vertical direction. The seat rails 9 extend obliquely upwardly rearwards from an upper end portion of the pivot frames 8 and support a seat (not shown) thereon.

The main frames 7 are formed by assembling a plurality of pipe members (also referred to as hollow members) by welding. An engine 10 is supported on the main frames 7 and the pivot frames 8. Reference numerals 11 and 12 denote first and second engine hangers provided on the vehicle body frame 3 for supporting the engine 10.

Reference numeral 13 denotes an attachment piece provided at a rear end of each main frame 7, and the attachment piece 13 is fastened to the pivot frame 8 to connect the main frame 7 and the pivot frame 8 with each other.

A fuel tank (not shown) and other parts are supported on the main frames 7.

Rear swing arms 15 are supported at a front end thereof for pivotal motion on each of the pivot frames 8 by a pivot 14, and the rear wheel 2 is supported at a rear end of the rear swing arms 15. A rear cushion unit 16 is interposed between a front portion of the rear swing arms 15 and the seat rails 9, and buffers rocking motion in the upward and downward directions around the pivot 14 of the rear swing arms 15 to thereby form a rear suspension.

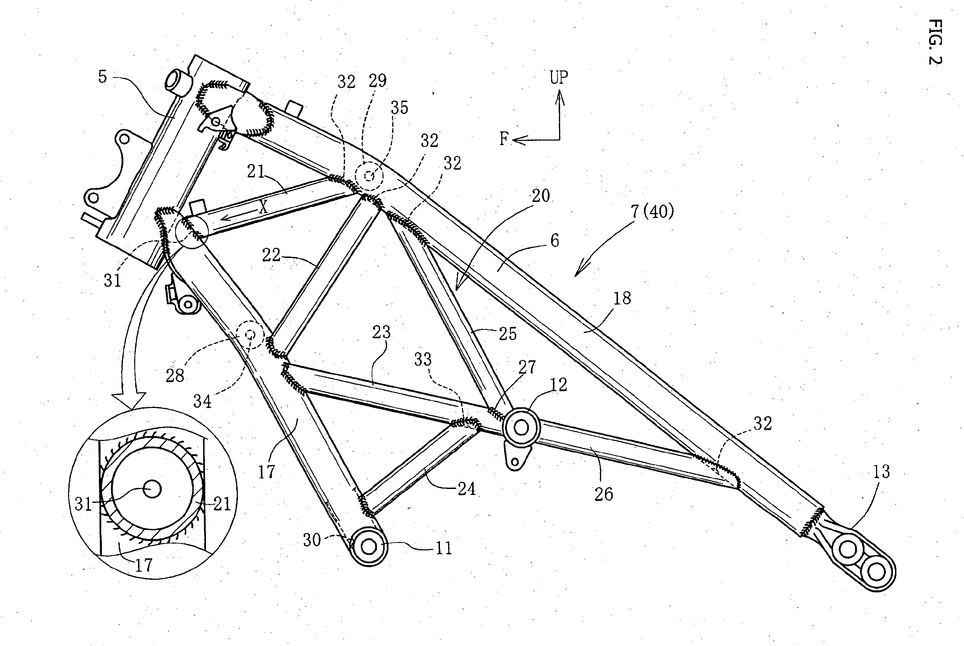

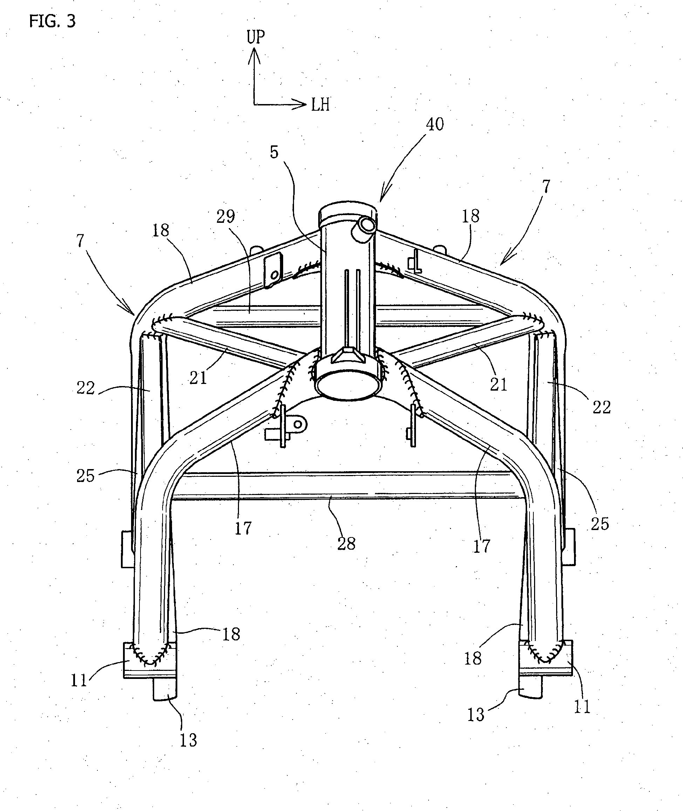

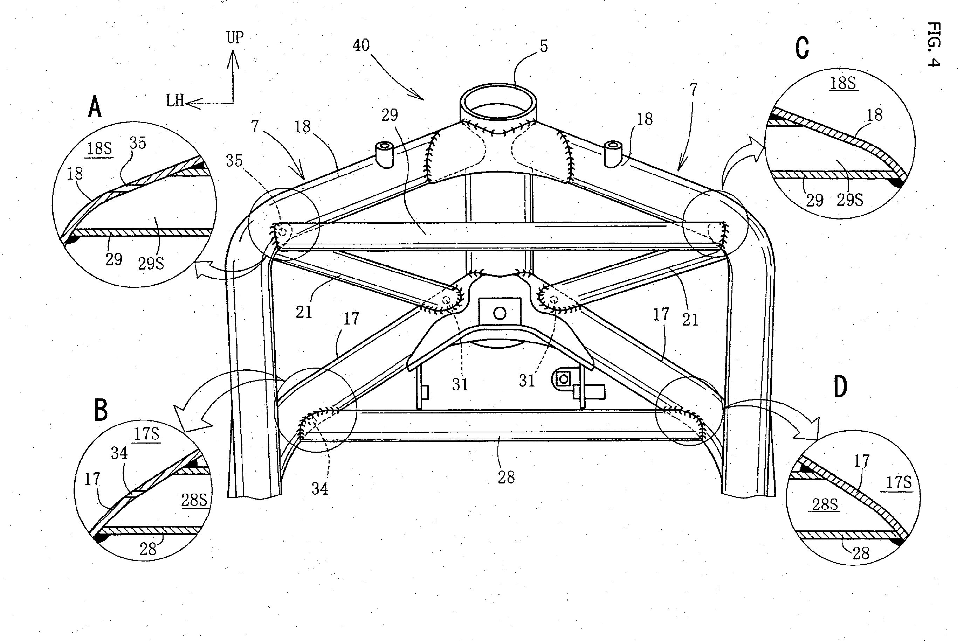

Now, a structure of the main frame will be described in detail. Fig. 2 is a left side elevational view, Fig. 3 is a front elevational view, and Fig. 4 is a rear elevational view of the main frame 7.

As shown in the Figures mentioned, the main frame 7 is a welded assembly which extends obliquely rearwardly downwards, and to the left (or right) from the head pipe 5, and is generally configured from a plurality of pipe members. Left and right main frames 7 are integrated by connection thereof by the head pipe 5 and cross pipes hereinafter described, to form a front frame assembly 40.

Each of the main frames 7 includes a lower frame 17 and an upper frame 18 disposed in a vertically spaced relationship from each other and extending obliquely downwardly and rearwards as viewed in side elevation.

The lower frame 17 and the upper frame 18 are each formed from a pipe member which is open at its opposite ends; the lower frame 17 is formed from a first hollow member, and the upper frame 18 is formed from a third hollow member. The openings at the front and rear end portions of the lower frame 17 and the upper frame 18 are closed by welding other members thereto, as described hereinafter.

The front ends of the lower frame 17 and the upper frame 18 are abutted with a side face of a tubular portion of the head pipe 5 (which is in the form of a hollow tube), and are welded at the abutted portions thereof such that they are integrated with the head pipe 5 and the front end openings are closed by the head pipe 5. Accordingly, the head pipe 5 serves as a front end closing member for the lower frame 17 and the upper frame 18.

The lower frame 17 is abutted and welded at a rear end thereof (which also is a lower end) to a side face of the first engine hanger 11, which is formed from a tubular member disposed so that it extends in the lateral direction. The opening at the rear end of the lower frame 17 is closed up with the first engine hanger 11, such that the first engine hanger 11 serves as a rear end closing member for the lower frame 17.

The upper frame 18 extends rearwardly further than the lower frame 17 and is closed up at the rear end thereof with the attachment piece 13 welded thereto. The attachment piece 13 thus serves as a rear end closing up member for the rear end opening of the upper frame 18.

As described hereinafter, an atmospheric air communicating hole 30, which is an air vent port and communicates directly with the atmosphere, is provided in the first engine hanger 11, and the hollow portion of the lower frame 17 thus communicates with the atmosphere on the outer side of the first engine hanger 11.

A state in which an opening at the end of a pipe member (such as the lower frame 17) is closed up with a different member, but in communication with an air vent port in the different member in this manner, is referred to herein as "closed in a communicating state". Such a connection of the pipe member is also referred to as "connection in a communicating state". On the other hand, a state where an opening of a pipe member is fully closed by a different member in which an air vent port is not formed, is referred to herein as "closed in a non-communicating state". Such a connection of the pipe member is also referred to as "connection in a non-communicating state".

Between the lower frame 17 and the upper frame 18 of each of the left and right main frames 7 is provided a side face reinforcing member 20 which forms a truss structure. The side face reinforcing member 20 is formed from a plurality of pipe members, which form reinforcing frames.

In the present example, a first reinforcing frame 21, a second reinforcing frame 22, a third reinforcing frame 23, a fourth reinforcing frame 24, a fifth reinforcing frame 25 and a sixth reinforcing frame 26 are provided generally in this order from the front side. However, an arbitrary number of such reinforcing frames may be provided. The reinforcing frames are disposed in such a manner as to cooperate with the lower frame 17 and the upper frame 18 to form a truss structure as viewed in side elevation (as shown in Fig. 2).

The first reinforcing frame 21 is a second hollow member, and is disposed in an obliquely forwardly downwardly inclined relationship as viewed in side elevation, near to and rearwardly of the head pipe 5. At its opposite ends, the first reinforcing frame 21 is abutted with and welded to side faces of tubular portions of the lower frame 17 and the upper frame 18, so that the openings at the opposite ends of the first reinforcing frame (second hollow member) are closed up by the lower frame 17 and the upper frame 18, respectively. However, as described hereinafter, the first reinforcing frame 21 is connected to the lower frame 17 and the upper frame 18 such that the hollow spaces thereof communicate with each other.

The second reinforcing frame 22, third reinforcing frame 23 and fourth reinforcing frame 24 are connected in a non-communicating state to the lower frame 17, and are also referred to as third hollow members.

The second reinforcing frame 22 is disposed rearwardly of and in a steeper inclination than the first reinforcing frame 21, and connects a front portion of the upper frame 18 just behind where the upper end portion of the first reinforcing frame 21 is connected to a longitudinally intermediate portion of the lower frame 17.

The front end of the third reinforcing frame 23 is abutted with and welded to a portion of the lower frame 17 just behind where the second reinforcing frame 22 is connected, and the opening at its front end is closed by the lower frame 17. The third reinforcing frame 23 extends rearwardly substantially horizontally, and its rear end is abutted with and welded to a side face of the second engine hanger 12, so that the opening at its rear end is closed up by the second engine hanger 12.

The fourth reinforcing frame 24 connects a rear end portion of the lower frame 17 just in front of the first engine hanger 11 with a rear end portion of the third reinforcing frame 23 just in front of the second engine hanger 12. At its opposite upper and lower ends, the fourth reinforcing frame 24 is abutted with and welded to side faces of the lower frame 17 and the third reinforcing frame 23, which consequently close up the upper and lower ends of the fourth reinforcing frame 24.

The fifth reinforcing frame 25 extends obliquely rearwardly downwards and connects a portion of the upper frame 18 just behind where the second reinforcing frame 22 is connected and a rear end portion of the third reinforcing frame 23 to each other. The upper end of the fifth reinforcing frame 25 is abutted with, welded to and closed up by the upper frame 18. The lower end of the fifth reinforcing frame 25 is abutted with and welded to a rear end of the third reinforcing frame 23, and is further abutted with and welded to a side face of the second engine hanger 12. The connection portion of the fifth reinforcing frame 25 to the rear end of the third reinforcing frame 23 is an obliquely cut butt welded portion 27.

The third reinforcing frame 23 and the sixth reinforcing frame 26 are disposed substantially horizontally in a substantially straight line with the second engine hanger 12 interposed therebetween, and connect a portion of the lower frame 17 just behind where the second reinforcing frame 22 is connected and a rear end portion of the upper frame 18 near the attachment piece 13 to each other.

A front end of the sixth reinforcing frame 26 is abutted with and welded to a side face of a rear side of the second engine hanger 12, and a rear end of the sixth reinforcing frame 26 is abutted with and welded to the lower side of a side face of the upper frame 18. The front end and the rear end of the sixth reinforcing frame 26 are closed.

As shown in Figs. 3 and 4, the left and right lower frames 17 are connected to each other by a first cross pipe 28 which is a reinforcing frame disposed substantially horizontally in the lateral direction. Similarly, the left and right upper frames 18 are connected to each other by a second cross pipe 29.

The first cross pipe 28 is a reinforcing frame disposed in parallel to and below the second cross pipe 29, and forms a truss structure together with the left and right lower frames 17 as viewed in plan view. The second cross pipe 29 also forms a truss structure together with the left and right upper frames 18 as viewed in plan view.

Each of the first cross pipe 28 and the second cross pipe 29 forms configures a cross member in the preferred embodiment of the present invention.

The first cross pipe 28 connects the inner sides of intermediate portions of the left and right lower frames 17, and its opposite ends are abutted with and welded to the inner side faces of the lower frames 17 such that the openings at the opposite ends of the first cross pipe 28 are closed. The second cross pipe 29 is provided between the inner sides of intermediate portions of the left and right upper frames 18, and its opposite ends are abutted with and welded to the inner side faces of intermediate portions of the left and right upper frames 18 such that the openings at the opposite ends of the second cross pipe 29 are similarly closed.

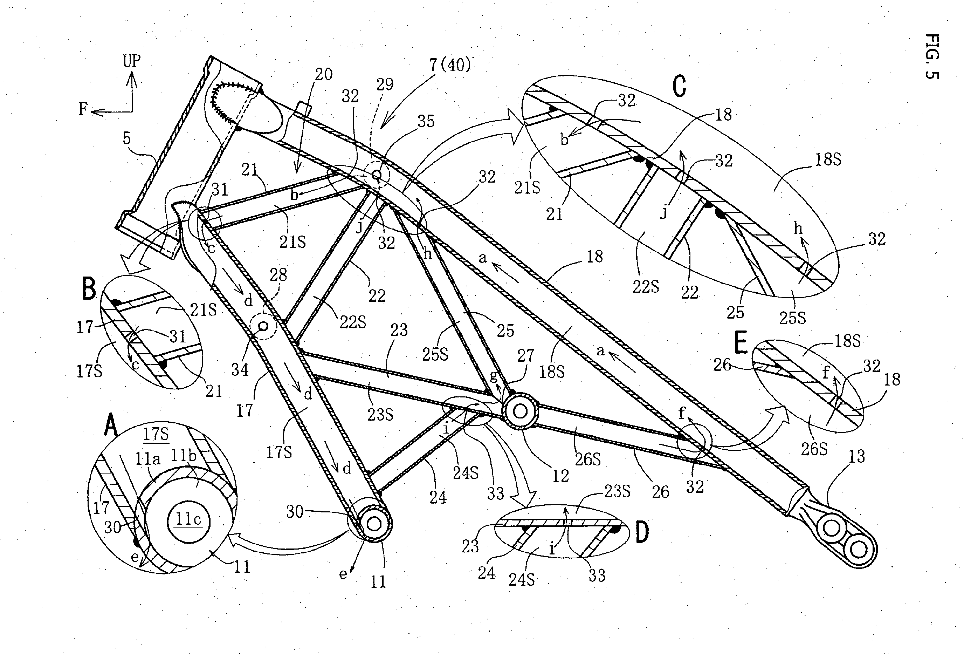

Fig. 5 is an explanatory view showing the connection portions of the pipe members to the left side main frame 7 in section.

As indicated by an enlarged portion A in Fig. 5, a hollow space 17S of the lower frame 17 is in communication with the atmosphere through an atmospheric air communicating hole 30 provided in the first engine hanger 11 and is open to the atmosphere at the atmospheric air communicating hole 30. It should be noted that, as described hereinafter, since hollow spaces of the pipe members (17, 18 and 20 to 26) which form the main frame 7 form a single continuous main frame space, the atmospheric air communicating hole 30 serves as an atmospheric air opening hole of the entire main frame space.

Further, since the main frame space is closed with respect to atmospheric pressure except the atmospheric air communicating hole 30, the atmospheric air communicating hole 30 serves as the only atmospheric air opening hole of the main frame 7.

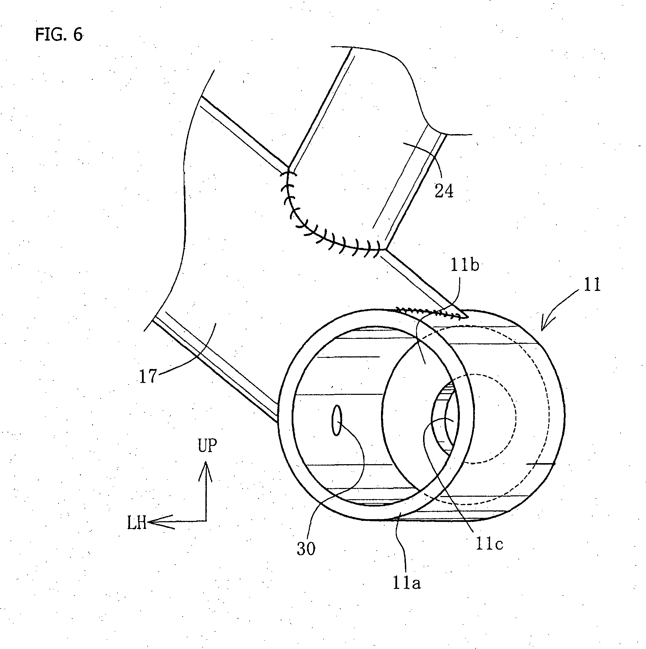

Fig. 6 is a perspective view of the first engine hanger 11 and associated elements showing a region around the atmospheric air communicating hole 30. As shown in Fig. 6, the first engine hanger 11 is a bottomed tubular member which supports the engine against vibration by fitting a rubber bush (not shown) in the inside space of a tubular portion 11a thereof and connecting the rubber bush to the engine by a bolt (not shown) fitted in a bolt fitting hole 11c formed in a bottom portion 11b. The second engine hanger 12 is a similar member.

The atmospheric air communicating hole 30 is provided at a portion of a side face of the tubular portion 11 a which faces the rear end opening of the lower frame 17.

Referring back to Fig. 5, and in particular the enlarged portion A, the atmospheric air communicating hole 30 is formed so as to extend through the tubular portion 11 a between the inside and the outside thereof, in a generally tangential direction, and is open downwardly. The atmospheric air communicating hole 30 allows the hollow space 17S of the lower frame 17 and the inside space of the tubular portion 11a of the first engine hanger 11 to communicate with each other. Since the inside space of the tubular portion 11a is open to the atmosphere at its axial opposite ends, the hollow space 17S of the lower frame 17 is open to the atmosphere through the atmospheric air communicating hole 30. Accordingly, the lower frame 17 is connected at the rear end portion thereof in a communicating relationship to the first engine hanger 11 and is closed at the rear end opening thereof in a communicating state by the first engine hanger 11.

Since the atmospheric air communicating hole 30 is formed by providing a communicating hole in the tubular portion 11a of the first engine hanger 11, which is a comparatively small cylindrical member, the atmospheric air communicating hole 30 can be formed readily and the workability is improved. It should be noted that the atmospheric air communicating hole 30 is positioned near the lowest portion of the lower frame 17 such that discharge of any liquid (water or liquid paint) which enters the hollow space 17S is facilitated and accelerated.

A front end portion of the first reinforcing frame 21 is connected to a front end portion of the lower frame 17, near the rear side of the head pipe 5. At the connection portion, the hollow space 17S of the lower frame 17 and the hollow space 21S of the first reinforcing frame 21 communicate with each other by means of a first air vent port 31 formed in a side face of the lower frame 17 (as shown in the enlarged view B in Fig. 5). The first air vent port 31 is an air vent port formed through the side face of the lower frame 17.

In Fig. 2, an enlarged portion surrounded by a circle is a view showing the first air vent port 31 as viewed along an axis of the first reinforcing frame 21 (the direction indicated by arrow X in Fig. 2), and the first reinforcing frame 21 is shown in a transverse plane in a direction perpendicular to the axial direction. As can be seen from in Fig. 2, the first air vent port 31 is provided at a portion of the side face of the lower frame 17 which is surrounded by an open end portion of the first reinforcing frame 21 such that it allows the hollow space 17S of the lower frame 17 and the hollow space 21 S of the first reinforcing frame 21 to communicate with each other. In particular, although the open end portion of the first reinforcing frame 21 is closed by the lower frame 17, it is not closed fully but is instead closed in a communicating state, because the first air vent port 31 connects it in a communicating state with the side face of the upper end portion of the lower frame 17.

Further, the first air vent port 31 is surrounded by the end portion opening of the first reinforcing frame 21 which abuts with the side face of the lower frame 17, such that it cannot be observed from the outside and is thus formed as a hidden hole which is not visible from the outside.

A structure similar to that shown in the enlarged portion of Fig. 2, that is, a structure wherein an air vent port formed on a side face of one hollow member is hidden by an end portion opening of another hollow member abutting with and connected to the one hollow member, is also used with the other vent holes, including the atmospheric air communicating hole 30.

The first air vent port 31 connects the inside of the lower frame 17 and the first reinforcing frame 21, such that the air in the first reinforcing frame 21 which expands as a result of heat applied during welding can escape to the hollow space 17S of the lower frame 17. Further, as described hereinafter, air which expands in the upper frame 18 can similarly escape to the lower frame 17 through the first reinforcing frame 21 and the first air vent port 31. It is to be noted that if the air in the hollow space 17S of the lower frame 17 expands as a result of welding, it can escape through the atmospheric air communicating hole 30 into the atmosphere.

The rear ends of the first reinforcing frame 21 and the second reinforcing frame 22 and the front end of the fifth reinforcing frame 25 are connected to a side face of a front portion of the upper frame 18, and at the connecting portions, second air vent ports 32 are provided on a lower face of the upper frame 18 as shown in an enlarged portion C in Fig. 5. The upper end openings of the first reinforcing frame 21, second reinforcing frame 22 and fifth reinforcing frame 25 are closed in a communicating state by the upper frame 18.

Three second air vent ports 32 are provided in a manner similar to the first air vent port 31, and are juxtaposed with each other in the longitudinal direction. The second air vent ports 32 are formed so as to extend through the side face of the upper frame 18.

The frontmost second air vent port 32 allows the hollow space 21 S of the first reinforcing frame 21 and the hollow space 18S of the upper frame 18 to communicate with each other, such that air in the upper frame 18 which is caused to expand by welding can escape to the first reinforcing frame 21 side.

The intermediate second air vent port 32 allows the hollow space 22S of the second reinforcing frame 22 and the hollow space 18S of the upper frame 18 to communicate with each other, such that air in the second reinforcing frame 22 which is caused to expand by welding can escape to the upper frame 18 side.

The rearmost second air vent port 32 allows the hollow space 25S of the fifth reinforcing frame 25 and the hollow space 18S of the upper frame 18 to communicate with each other, such that air in the fifth reinforcing frame 25 which is caused to expand by welding can escape to the upper frame 18 side.

The upper (rear) end portion of the fourth reinforcing frame 24 is connected in a communicating state to a face of a rear end portion of the third reinforcing frame 23. At the connecting portion, the hollow space 24S of the fourth reinforcing frame 24 and the hollow space 23S of the third reinforcing frame 23 can communicate with each other by means of a third air vent port 33 provided on the third reinforcing frame 23 side, as shown in an enlarged portion D in Fig. 5. Thus, air in the fourth reinforcing frame 24 which is caused to expand by welding can escape to the third reinforcing frame 23 through the third air vent port 33. The third air vent port 33 is an air vent port provided in a reinforcing frame.

A rear end portion of the third reinforcing frame 23 is abutted with and welded to a front side face of the second engine hanger 12, and is also connected to a lower end portion of the fifth reinforcing frame 25 by welding.

The connection between the third reinforcing frame 23 and the fifth reinforcing frame 25 is provided such that an obliquely cut portion is provided at each of a rear end portion of the third reinforcing frame 23 and a lower end portion of the fifth reinforcing frame 25, and the inclined cut portions are abutted with and welded to each other to form the butt welded portion 27. The hollow space 23S of the third reinforcing frame 23 and the hollow space 25S of the fifth reinforcing frame 25 communicate with each other through the open section inside the butt welded portion 27.

A lower end portion of the fifth reinforcing frame 25 is abutted with and welded to the front side face of the second engine hanger 12, and is connected at the lower end portion thereof to the rear end portion of the third reinforcing frame 23 in a communicating state by welding as described above. Further, the openings at the rear end portion of the third reinforcing frame 23 and the lower end portion of the fifth reinforcing frame 25 are closed by the second engine hanger 12. The second engine hanger 12 is not provided with a hole which is open to the atmosphere.

Accordingly, air in the third reinforcing frame 23 and the fourth reinforcing frame 24 which is caused to expand by welding can escape to the fifth reinforcing frame 25 through the communicating portion formed inside the butt welded portion 27 at the lower end portion of the fifth reinforcing frame 25.

The front end of the sixth reinforcing frame 26 is closed by the second engine hanger 12. The rear end of the sixth reinforcing frame 26 is abutted with and welded to a lower side face of a rear end portion of the upper frame 18. As shown in an expanded portion E in Fig. 5, the hollow space 26S of the sixth reinforcing frame 26 and the hollow space 18S of the upper frame 18 can communicate with each other by means of the second air vent port 32 provided in the upper frame 18. The second air vent port 32 is provided in a manner similar to the other second air vent ports 32 (located further forward on the upper frame 18), and allow air in the sixth reinforcing frame 26 which has been caused to expand by welding to escape into the upper frame 18.

Although the second reinforcing frame 22, third reinforcing frame 23 and fourth reinforcing frame 24 are welded to the lower frame 17, none of these joints are provided with an air vent port as is provided at the region where the first reinforcing frame 21 is welded to the lower frame, and so the openings of the second reinforcing frame 22, third reinforcing frame 23 and fourth reinforcing frame 24 are closed in a non-communicating fashion by the lower frame 17.

Thus, the atmospheric air communicating hole 30 is provided at the lower end portion of the lower frame 17 and the first air vent port 31 is provided at the upper end portion of the lower frame 17, while no such air vent ports are provided at an intermediate portion of the lower frame 17. Consequently, the use of the fewest necessary air vent ports is assured, while fluid is prevented from entering the upper frame 18 from the intermediate portion of the lower frame 17 positioned below the first air vent port 31. Further, the number of through-holes in the lower frame 17 is reduced as far as possible, so that required strength can be assured.

It should be noted that the main frame 7 on the right side is configured in a similar manner to, and has an air venting structure the same as that of, the main frame 7 on the left side. In particular, although both of the left and right main frames 7 include the atmospheric air communicating hole 30 and the first air vent port 31, second air vent port 32 and third air vent port 33, they are closed at their front end portions by the head pipe 5 and are closed at their rear end portions by the first engine hanger 11 and the attachment piece 13 such that they are not communicated with each other as shown in Figs. 3 and 4.

In short, each of the left and right main frames 7 includes only one atmospheric air communicating hole 30, which is a single atmospheric pressure opening hole, and air can be removed from the left and right main frames 7 separately from each other through the atmospheric air communicating holes 30 into the atmosphere.

However, as shown in Figs. 3 and 4, each of the first cross pipe 28 and the second cross pipe 29 requires an air vent port, because they are welded individually at their opposite left and right end portions to the left and right lower frames 17 and upper frames 18. Therefore, in the present example, a fourth air vent port 34 and a fifth air vent port 35 are provided at the connecting portions to the lower frame 17 and the upper frame 18 which configure the left main frame 7, respectively. It should be noted that, since the fourth air vent port 34 and the fifth air vent port 35 are formed in the left lower frame 17 and the left upper frame 18, respectively, they are part of the first air vent port 31 and the second air vent port 32. However, in order to make it clear that these ports are provided for connection to the cross pipes, specifically they are named as such.

As shown in the enlarged portions A and B in Fig. 4, the fourth air vent port 34 is provided in the left lower frame 17 such that the hollow space 28S of the first cross pipe 28 and the hollow space 17S of the left lower frame 17 communicate with each other, and the fifth air vent port 35 is provided in the left upper frame 18 such that the hollow space 29S of the second cross pipe 29 and the hollow space 18S of the left upper frame 18 communicate with each other. Consequently, air which is caused to expand as a result of welding of the first cross pipe 28 and the second cross pipe 29 can escape to the left main frame 7.

As shown in enlarged portions C and D in Fig. 4, no air vent port is provided at the connecting portion between the lower frame 17 of the right main frame 7 and the first cross pipe 28, or at the connecting portion between the upper frame 18 of the right main frame 7 and the second cross pipe 29. Consequently, the first cross pipe 28 and the second cross pipe 29 are not in communication with the right main frame 7.

With the configuration just described, air in the first cross pipe 28 and the second cross pipe 29 which is caused to expand as a result of welding can escape sufficiently through the fourth air vent port 34 and the fifth air vent port 35. Further, since the fourth air vent port 34 and the fifth air vent port 35 are not provided in the right main frame 7, the number of through-holes which need to be provided in the lower frame 17 and the upper frame 18 is reduced so that necessary strength for the main frame 7 can be assured readily.

In particular, since the first cross pipe 28 and the second cross pipe 29 are reinforcing members for the lateral direction of the vehicle body, intensity enhancement by such consideration is effective.

It should be noted that the fourth air vent port 34 and the fifth air vent port 35 can be provided on the right main frame 7, rather than the left main frame 7 as shown. It would also be possible to provide one of the fourth air vent port 34 and the fifth air vent port 35 in the left main frame 7, and provide the other one of the fourth air vent port 34 and the fifth air vent port 35 in the right main frame 7.

Now, venting of air in the frame when it is assembled by welding is described. When the main frame 7 is assembled by welding, high heat is generated by welding of the pipe members and so forth and the air in the hollow spaces thermally expands, and so air venting is required. Since the left and right main frames 7 are configured such that the internal spaces of the tubular members are in communication with each other through the air vent ports, and are open to the atmosphere through the atmospheric air communicating hole 30, the air can be vented quickly through the atmospheric air communicating hole 30.

In particular, as shown in Fig. 5, upon welding of the attachment piece 13 and the sixth reinforcing frame 26 to the upper frame 18, expanded air flows as indicated by arrows a → b → c → d → e. Thus, the expanded air escapes along the route of the hollow space 18S of the upper frame 18 → second air vent port 32 → hollow space 21 S of the first reinforcing frame 21 → first air vent port 31 → hollow space 17S of the lower frame 17 → atmospheric air communicating hole 30 → inside space of the tubular portion 11a of the first engine hanger 11 → atmosphere. In the following description, this route is referred to as the basic air venting route.

It should be noted that air which is caused to expand as a result of welding of the second engine hanger 12 and the sixth reinforcing frame 26 can escape into the hollow space 18S of the upper frame 18 as indicated by arrow f. From the hollow space 18S of the upper frame 18, air escapes into the atmosphere along the basic air venting route as described above.

Air which is caused to expand as a result of welding between the second engine hanger 12 and the third reinforcing frame 23 and fifth reinforcing frame 25 enters the hollow space 25S of the fifth reinforcing frame 25 as indicated by arrow g and can pass through the second air vent port 32 into the hollow space 18S of the upper frame 18 as further indicated by arrow h.

At this time, the expanded air from the third reinforcing frame 23 side enters the hollow space 25S from the hollow space 23S through the opening in the butt welded portion 27. Since the third reinforcing frame 23 is connected in a non-communicating state to the lower frame 17, air which is caused to expand as a result of welding the third reinforcing frame 23 to the lower frame 17 enters the hollow space 25S of the fifth reinforcing frame 25 as indicated by arrow g through the opening in the butt welded portion 27. Furthermore, air from the hollow space 23S which is caused to expand as a result of welding between the third reinforcing frame 23 and the fourth reinforcing frame 24 enters the hollow space 25S of the fifth reinforcing frame 25 as indicated by arrow g through the opening in the butt welded portion 27.

Air in the fourth reinforcing frame 24 which is caused to expand when the fourth reinforcing frame 24 is welded (connected in a non-communicating state) to the lower frame 17 enters the hollow space 23S of the third reinforcing frame 23 from the hollow space 24S through the third air vent port 33, as indicated by arrow i, and further enters the hollow space 25S of the fifth reinforcing frame 25 as indicated by arrow g through the opening in the butt welded portion 27.

Air in the second reinforcing frame 22 which is caused to expand when the second reinforcing frame 22 is welded (connected in a non-communicating state) to the lower frame 17 enters the hollow space 18S of the upper frame 18 from the hollow space 22S through the second air vent port 32 as indicated by arrow j.

Thus, air which is caused to expand as a result of welding of the pipe members can escape to the atmosphere air through the single atmospheric air communicating hole 30, regardless of where the welding causing the expansion took place.

It should be noted that, since the left and right main frames 7 are integrated with each other in a non-communicating state by the head pipe 5, air venting from the atmospheric air communicating hole 30 is carried out separately in each of the left and right main frames 7.

Air in the lower frame 17 and the upper frame 18 which is caused to expand as a result of welding to the head pipe 5 is removed separately for the left and right frames along the basic air venting route or a route indicated by arrows d → e which lead to the atmospheric air communicating hole 30 from the lower frame 17.

The first cross pipe 28 and the second cross pipe 29 are connected in a non-communicating state to the right main frame 7 and connected in a communicating state to the left main frame 7. Accordingly, air in the first cross pipe 28 and the second cross pipe 29 which is caused to expand as a result of welding flows into the left main frame 7 from the fourth air vent port 34 and the fifth air vent port 35 and is removed.

Since the fourth air vent port 34 is positioned near the region where the lower frame 17 is connected to the second reinforcing frame 22, expanding air escaping from the first cross pipe 28 enters the hollow space 17S of the lower frame 17 and is removed along the route indicated by arrows d → e.

Since the fifth air vent port 35 is provided near the region where the upper frame 18 is connected to the second reinforcing frame 22, expanding air escaping from the second cross pipe 29 enters the hollow space 18S of the upper frame 18 and is thereafter removed along the basic air venting route.

Even if only one atmospheric air communicating hole 30 is provided as an atmospheric air opening hole in this manner, the number of air venting holes can be reduced as far as possible, and since the other air venting holes are formed so that they are not visible from the outside, the outer appearance can be improved. Therefore, a suitable frame for a motorcycle where importance is attached to its outer appearance importance can be obtained. Further, since the atmospheric air communicating hole 30 is provided such that it extends through the tubular portion 11a of the first engine hanger 11 between the inside and the outside of the same in a direction perpendicular to the axis of the tubular portion 11a, it is hardly observable from the outside. Therefore, the outer appearance is further improved.

Further, since the atmospheric air communicating hole 30 is provided in the first engine hanger 11 which is at a rear (lower) end portion of the lower frame 17 and is open downwardly toward the inner space of the tubular portion 11a, liquid such as water is unlikely to enter the interior of the frame. Further, even if liquid does enter, it can be readily discharged from the atmospheric air communicating hole 30 provided at a lower end portion of the lower frame 17.

Furthermore, in the completed vehicle after assembly, a bush is fitted in the tubular portion 11 a of the first engine hanger 11 and the atmospheric air communicating hole 30 which faces the inner face of the tubular portion 11a is closed up by the bush. As a result, the atmospheric air communicating hole 30 is not visible from the outside. Consequently, the outer appearance can be further improved, and intrusion of liquid can be prevented more securely.

Now, a step of coating of the front frame assembly 40 assembled by integral connection of the left and right main frames 7 by the head pipe 5 and the first cross pipe 28 and second cross pipe 29 is described. In the present example, the front frame assembly 40 is electrodeposition coated by dipping into liquid paint. However, the coating is not limited to electrodeposition coating only if dipping is applied.

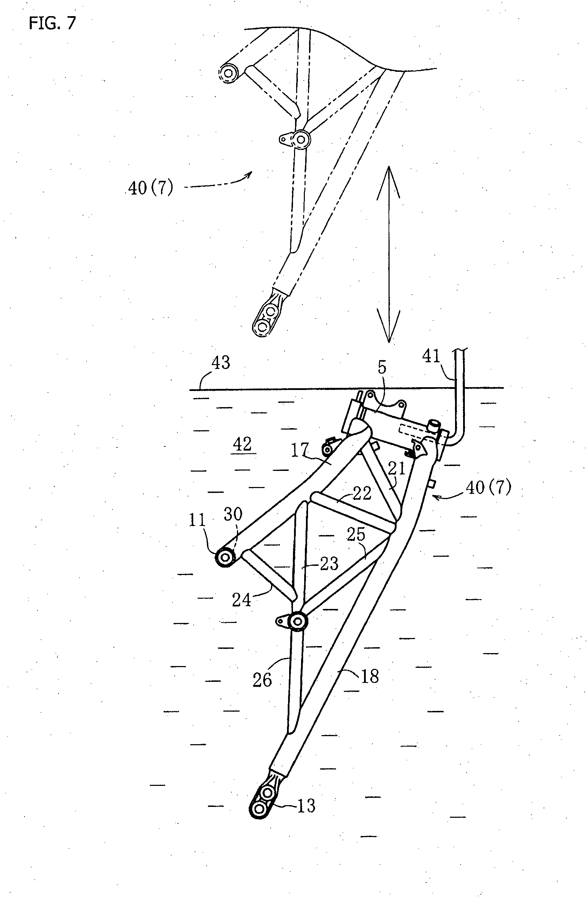

Fig. 7 is a view illustrating a coating step. The front frame assembly 40 is suspended by hooking the head pipe 5 onto a hook 41, and is dipped from above into liquid paint 42 filled in a paint tank.

In the suspended state, the lower frame 17 and the upper frame 18 extend generally vertically, such that they extend substantially perpendicularly to the liquid surface 43, and the lower frame 17 and the upper frame 18 are relatively positioned such that the lower frame 17 is positioned above the upper frame 18. Further, the first engine hanger 11 is positioned at a lower end of the lower frame 17 and the attachment piece 13 is positioned at a lower end of the upper frame 18, with the first engine hanger 11 positioned above the attachment piece 13.

Further, the lower frame 17 is positioned such that the atmospheric air communicating hole 30 is positioned at a lower end portion and the first air vent port 31 is positioned at an upper end portion, such that there is a considerable vertical separation between them.

Therefore, after dipping of the front frame assembly 40 is started, the lower half portion side of the upper frame 18 enters the liquid paint 42, beginning with the attachment piece 13.

However, since the front frame assembly 40 does not have any through-hole which communicates with the outside (other than the atmospheric air communicating hole 30 provided in the first engine hanger 11), as long as the first engine hanger 11 is positioned higher than the liquid surface 43, the liquid paint 42 cannot enter the front frame assembly 40 from the portion dipped in the liquid paint 42.

When the first engine hanger 11 reaches the liquid surface 43 and begins to enter the liquid paint 42, the atmospheric air communicating hole 30 (which is the single through-hole referred to in the preceding paragraph) enters the liquid paint 42. Consequently, the liquid paint 42 tends to enter the lower frame 17 through the atmospheric air communicating hole 30.

However, the lower frame 17 extends in the vertical direction and is closed at its upper and lower ends by the head pipe 5 and the first engine hanger 11 respectively, communicates with the outside only at one place (the atmospheric air communicating hole 30 provided in the first engine hanger 11 at the lower end), and communicates at the first air vent port 31 provided its upper end with the main frame space. The main frame space is formed by communication of the hollow spaces of the pipe members which form the front frame assembly 40, and is closed with respect to the outside except for the atmospheric air communicating hole 30.

Accordingly, if the atmospheric air communicating hole 30 is closed up by being submerged in the liquid paint 42, then the main frame space becomes a fully enclosed space. The pressure of the air confined in the enclosed space resists entry of the liquid paint 42 into the lower frame 17 through the atmospheric air communicating hole 30. Further, since the atmospheric air communicating hole 30 is positioned at a lower end portion of the lower frame 17, the air in the lower frame 17 is positioned higher than the atmospheric air communicating hole 30 and is likely to be confined and besides is less likely to escape into the liquid paint 42 through the atmospheric air communicating hole 30 at the lower end portion.

Therefore, even if the liquid paint 42 would tend to enter the lower frame 17 through the atmospheric air communicating hole 30, this is blocked. Further, even if the liquid paint 42 enters, the amount which enters is limited.

Further, since the atmospheric air communicating hole 30 is provided at a lower end portion of the lower frame 17 and the first air vent port 31 is provided at an upper end portion of the lower frame 17, with no other through-holes such as air vent ports being provided at an intermediate portion of the lower frame 17, even if the liquid paint 42 advances a little into the hollow space 17S through the atmospheric air communicating hole 30 at the lower end portion, the liquid cannot advance from an intermediate portion of the lower frame 17 below the first air vent port 31 to the upper frame 18 side.

Since the liquid paint 42 which may enter the hollow space 17S does not reach the first air vent port 31 at the upper end portion, the situation where the liquid paint 42 advances to the upper frame 18 side can be prevented. Thus, even if the liquid paint 42 should enter the hollow space 17S, it remains in the hollow space 17S, and when the front frame assembly 40 is pulled upwardly from the paint liquid tank, the liquid paint 42 in the hollow space 17S is discharged to the outside through the atmospheric air communicating hole 30 readily and rapidly.

If the atmospheric air communicating hole 30 is closed up with the liquid paint 42, then even if the atmospheric air communicating hole 30 thereafter moves deeper into the liquid paint 42, advancement of the liquid paint 42 into the lower frame 17 remains blocked; even when the front frame assembly 40 is fully immersed in the liquid paint 42, intrusion of the liquid paint 42 still remains blocked.

Accordingly, when the front frame assembly 40 is dipped into the liquid paint 42 for coating, intrusion of the liquid paint 42 into the inside of the front frame assembly 40 can be blocked or minimized, and a step of discharging the intruding liquid paint after the painting can be omitted or minimized. Therefore, even though the atmospheric air communicating hole 30 which is essential to allow for assembly by welding is provided, later painting can be facilitated.

The invention of the present application is not limited to the embodiment described above, but various modifications and applications can be made without departing from the subject matter of the invention as defined by the claims.

For example, the vehicle to which the frame of the present invention is applied may be a saddle type vehicle other than a motorcycle. Also, the frame for a motorcycle is not limited to a main frame, but may be a seat rail which forms a rear part of a vehicle body frame (which includes upper and lower pipe members).

As the hollow members, at least the first hollow member, second hollow member and third hollow member are required, and an arbitrary number of hollow members may be provided. For example, the number of reinforcing frames may be arbitrarily selected (except for the first reinforcing frame which is essential).

Further, the hollow members may be simple round pipes or angular pipes formed by drawing, or may be formed by sticking two exterior parts together at the edges thereof.

## Claims

1. A hollow welded assembled frame structure, wherein the frame is the frame of a saddle ride type vehicle, comprising a plurality of hollow tubular members which are integrally assembled by being connected to each other by welding, wherein:
said hollow members include at least a first hollow member (17), a second hollow member (21) and a third hollow member (18);
said first hollow member (17) is closed at one end thereof and has an atmospheric air communicating hole (30) provided at the other end portion so as to allow communication between an internal hollow space (17S) and the atmospheric air;
said second hollow member (21) is welded at one end thereof to a side face of said first hollow member (17), such that said second hollow member (21) is abutted with the side face of said first hollow member (17), and is connected in a communicating state with a first air vent port (31) provided at the region where said first hollow member (17) and said second hollow member (21) are connected, so as to allow the hollow spaces (17S, 21S) of said first hollow member (17) and said second hollow member (21) to communicate with each other;
said third hollow member (18) is closed at both ends thereof, and has a side face to which the other end of said second hollow member (21) is welded, such that said other end of said second hollow member (21) is abutted with the side face of said third hollow member (18), and is connected in a communicating state with a second air vent port (32) is provided at the region where said second hollow member (21) and said third hollow member (18) are connected, so as to allow the hollow spaces (18S, 21S) of said third hollow member (18) and said second hollow member (21) to communicate with each other;
said first air vent port (31) and said second air vent port (32) are formed as holes which are hidden by the second hollow member (21) welded with the openings abutted therewith so as not to be observed from the outside; and
said first air vent port (31) is provided at a position spaced by a predetermined distance from said atmospheric air communicating hole (30) in the lengthwise direction of said first hollow member (17).

2. The hollow welded assembled frame structure according to claim 1, wherein:
said hollow welded assembled frame structure includes a main frame (7) which extends rearwardly from an upper portion of a head pipe (5) as viewed in side elevation of a saddle type vehicle in which said frame structure is used;
said main frame (7) includes an upper frame (18) and a lower frame (17) provided in a vertically spaced relationship from each other, and a plurality of reinforcing frames each formed from a hollow member and connecting said upper frame and lower frames to each other;
said lower frame (17) serves as the first hollow member and has the atmospheric air communicating hole (30) provided at a lower end portion thereof;
said upper frame (18) serves as the third hollow member;
said first reinforcing frame (21) which is positioned nearest to said head pipe (5) from among the reinforcing frames serves as the second hollow member;
said lower frame (17) and said first reinforcing frame (21) are connected in a communicating state with each other through said first air vent port (31); and
said upper frame (18) and said first reinforcing frame (21) are connected in a communicating state with each other through said second air vent port (32).

3. The hollow welded assembled frame structure according to claim 2, wherein said reinforcing frames include a second reinforcing frame (22) which is disposed rearwardly of said first reinforcing frame (21), is connected at one end thereof to said lower frame (17) in a non-communicating state between said atmospheric air communicating hole (30) and said first air vent port (31), and is connected at the other end thereof to said upper frame (18) in a communicating state.

4. The hollow welded assembled frame structure according to claim 2 or 3, wherein said reinforcing frames include a third reinforcing frame (23) and a fourth reinforcing frame (24) which are disposed rearwardly of said first reinforcing frame (21), the third reinforcing frame (23) and fourth reinforcing frame (24) being connected at respective first ends thereof to said lower frame (17) in a non-communicating state between said atmospheric air communicating hole (30) and said first air vent port (31), and said third reinforcing frame (23) and said fourth reinforcing frame (24) being connected at respective second ends thereof to each other in a communicating state, and further connected to said upper frame (18) in a communicating state through a fifth hollow member (25), which is a different hollow member.

5. The hollow welded assembled frame structure according to any of claims 2 to 4, wherein a lower end portion of said lower frame (17) is connected to an engine hanger (11) of a cylindrical shape extending laterally, and said atmospheric air communicating hole (30) is formed in a cylindrical portion (11a) of said engine hanger (11).

6. The hollow welded assembled frame structure according to any of claims 2 to 5, wherein a pair of left and right main frames (7) are provided and connected to and integrated by said head pipe (5) and are connected to each other in a non-communicating state, and
each of said left and right main frames (7) includes a said atmospheric air communicating hole (30).

7. The hollow welded assembled frame structure according to claim 6, wherein the hollow welded assembled frame includes hollow cross members (28, 29) extending in the lateral direction, for connecting said paired left and right main frames (7) to each other, and
said cross members are connected at one end thereof in a communicating state and are connected at the other end thereof in a non-communicating state to said paired left and right main frames (7).

8. The hollow welded assembled frame according to claim 7, wherein said cross members include a first cross member (28) and a second cross member (29) vertically spaced from each other;
said first cross member (28) connects the left and right lower frames (17) to each other; and
said second cross member (29) connects the left and right upper frames (18) to each other.

9. The hollow welded assembled frame according to any of claims 1 to 8, wherein
said hollow welded assembled frame structure is coated by dipping the same into liquid paint (42) after assembly by welding thereof;
during the painting, said first hollow member (17) is disposed above a liquid surface (43) of the paint such that a lengthwise direction thereof is directed in a generally vertical direction; and
in this state, said atmospheric air communicating hole (30) is open generally downwardly at a lower end portion thereof while said first air vent port (31) is provided so as to be positioned on an upper end portion side.

## Patentansprüche

1. Hohle geschweißte Rahmenstruktur, bei der der Rahmen der Rahmen eines Fahrzeugs vom Sattelfahrtyp ist, umfassend eine Vielzahl von hohlen röhrenförmigen Elementen, die zu einem Ganzen zusammengeführt sind, indem sie durch Verschweißen miteinander verbunden sind, wobei:
die hohlen Elemente mindestens ein erstes hohles Element (17), ein zweites hohles Element (21) und ein drittes hohles Element (18) umfassen;
das erste hohle Element (17) an einem seiner Enden geschlossen ist und ein Atmosphärenluft-Übertragungsloch (30) an seinem anderen Endbereich aufweist, um eine Übertragung zwischen einem internen Hohlraum (17S) und der Atmosphärenluft zu ermöglichen;
das zweite hohle Element (21) an einem seiner Enden an einer Seitenfläche des ersten hohlen Elements (17) angeschweißt ist, so dass das zweite hohle Element (21) an der Seitenfläche des ersten hohlen Elements (17) angrenzt und in einem Übertragungszustand mit einer ersten Belüftungsöffnung (31) verbunden ist, die in der Gegend bereitgestellt ist, in der das erste hohle Element (17) und das zweite hohle Element (21) verbunden sind, um den Hohlräumen (17S, 21 S) des ersten hohlen Elements (17) und des zweiten hohlen Elements (21) zu erlauben, zwischen einander zu übertragen;
das dritte hohle Element (18) an beiden seiner Enden geschlossen ist und eine Seitenfläche aufweist, an der das andere Ende des zweiten hohlen Elements (21) angeschweißt ist, so dass das andere Ende des zweiten hohlen Elements (21) an der Seitenfläche des dritten hohlen Elements (18) angrenzt, und in einem Übertragungszustand mit einer zweiten Belüftungsöffnung (32) verbunden ist, die in der Gegend bereitgestellt ist, in der das zweite hohle Element (21) und das dritte hohle Element (18) verbunden sind, um den Hohlräumen (18S, 21 S) des dritten hohlen Elements (18) und des zweiten hohlen Elements (21) zu ermöglichen, zwischen einander zu übertragen;
die erste Belüftungsöffnung (31) und die zweite Belüftungsöffnung (32) als Löcher ausgebildet sind, die durch das zweite hohle Element (21) verdeckt sind, das an die Öffnungen angrenzend angeschweißt ist, so dass sie nicht von der Außenseite zu sehen sind; und
die erste Belüftungsöffnung (31) an einer Position bereitgestellt ist, die mit einem vorbestimmten Abstand von dem Atmosphärenluft-Übertragungsloch (30) in der Längsrichtung des ersten hohlen Elements (17) beabstandet ist.

2. Hohle geschweißte Rahmenstruktur gemäß Anspruch 1, bei der:
die hohle geschweißte Rahmenstruktur einen Hauptrahmen (7) umfasst, der sich rückwärtig von einem oberen Bereich eines Kopfrohres (5) erstreckt, wie es in einer Seitenansicht eines Fahrzeugs vom Satteltyp, in dem die Rahmenstruktur verwendet wird, zu sehen ist;
der Hauptrahmen (7) einen oberen Rahmen (18) und einen unteren Rahmen (17), die in einem vertikal beabstandeten Verhältnis zueinander bereitgestellt sind, und eine Vielzahl von Verstärkungsrahmen, die jeweils von einem hohlen Element gebildet sind und den oberen Rahmen und den unteren Rahmen miteinander verbinden, umfasst;
der untere Rahmen (17) als das erste hohle Element dient und das Atmosphärenluft-Übertragungsloch (30) aufweist, das an einem unteren Endbereich dessen angeordnet ist;
der obere Rahmen (18) als das dritte hohle Element dient;
der erste Verstärkungsrahmen (21), der bezogen auf die Verstärkungsrahmen am nächsten zum Kopfrohr (5) angeordnet ist, als das zweite hohle Element dient;
der untere Rahmen (17) und der erste Verstärkungsrahmen (21) in einem Übertragungszustand durch die erste Belüftungsöffnung (31) miteinander verbunden sind; und
der obere Rahmen (18) und der erste Verstärkungsrahmen (21) in einem Übertragungszustand durch die zweite Belüftungsöffnung (32) miteinander verbunden sind.

3. Hohle geschweißte Rahmenstruktur gemäß Anspruch 2, bei der die Verstärkungsrahmen einen zweiten Verstärkungsrahmen (22) umfassen, der rückwärtig des ersten Verstärkungsrahmens (21) angeordnet ist, mit einem seiner Enden mit dem unteren Rahmen (17) in einem nicht übertragenden Zustand zwischen dem Atmosphärenluft-Übertragungsloch (30) und der ersten Belüftungsöffnung (31) verbunden ist, und mit seinem anderen Ende mit dem oberen Rahmen (18) in einem Übertragungszustand verbunden ist.

4. Hohle geschweißte Rahmenstruktur gemäß den Ansprüchen 2 oder 3, bei der die Verstärkungsrahmen einen dritten Verstärkungsrahmen (23) und einen vierten Verstärkungsrahmen (24) aufweisen, die rückwärtig des ersten Verstärkungsrahmens (21) angeordnet sind, wobei der dritte Verstärkungsrahmen (23) und der vierte Verstärkungsrahmen (24) an jeweils an ihnen vorhandenen ersten Enden mit dem unteren Rahmen (17) in einem nicht übertragenden Zustand zwischen dem AtmosphärenluftÜbertragungsloch (30) und der ersten Belüftungsöffnung (31) verbunden sind, und der dritte Verstärkungsrahmen (23) und der vierte Verstärkungsrahmen (24) an jeweils an ihnen vorhandenen zweiten Enden in einem Übertragungszustand miteinander verbunden sind und außerdem mit dem oberen Rahmen (18) durch ein fünftes hohles Element (25), das ein anderes hohles Element ist, in einem Übertragungszustand verbunden sind.

5. Hohle geschweißte Rahmenstruktur gemäß einem der Ansprüche 2 bis 4, bei der ein unterer Endbereich des unteren Rahmens (17) mit einer Motoraufhängung (11), die eine zylindrische Form aufweist, die sich lateral erstreckt, verbunden ist, und das Atmosphärenluft-Übertragungsloch (30) in einem zylindrischen Bereich (11a) der Motoraufhängung (11) ausgebildet ist.

6. Hohle geschweißte Rahmenstruktur gemäß einem der Ansprüche 2 bis 5, bei der ein Paar von linken und rechten Hauptrahmen (7) bereitgestellt sind und verbunden sind mit und zusammengeführt sind durch das Kopfrohr (5) und miteinander in einem nicht übertragenden Zustand verbunden sind, und
jeder der linken und rechten Hauptrahmen (7) ein Atmosphärenluft-Übertragungsloch (30) umfasst.

7. Hohle geschweißte Rahmenstruktur gemäß Anspruch 6, bei der die hohle geschweißte Rahmenstruktur hohle Querträger (28, 29), die sich in der lateralen Richtung erstrecken, zum miteinander Verbinden der gepaarten linken und rechten Hauptrahmen (7) umfasst, und
die Querträger an einem ihrer Enden in einem Übertragungszustand miteinander verbunden sind und an ihrem anderen Ende in einem nicht übertragenden Zustand mit den gepaarten linken und rechten Hauptrahmen (7) verbunden sind.

8. Hohle geschweißte Rahmenstruktur gemäß Anspruch 7, bei der die Querträger einen ersten Querträger (28) und einen zweiten Querträger (29) umfassen, die vertikal voneinander beabstandet sind;
der erste Querträger (28) die linken und rechten unteren Rahmen (17) miteinander verbindet; und
der zweite Querträger (29) die linken und rechten oberen Rahmen (18) miteinander verbindet.

9. Hohle geschweißte Rahmenstruktur gemäß einem der Ansprüche 1 bis 8, bei der
die hohle geschweißte Rahmenstruktur beschichtet wird, indem sie in flüssigen Anstrich (42) getaucht wird, nachdem sie durch Verschweißen zusammengeführt ist;
während des Anstreichens das erste hohle Element (17) über einer Flüssigkeitsoberfläche (43) des Anstrichs angeordnet ist, so dass eine Längsrichtung dessen in eine im Allgemeinen vertikale Richtung gerichtet ist; und
in diesem Zustand das Atmosphärenluft-Übertragungsloch (30) im Allgemeinen an einem unteren Endbereich dessen nach unten offen ist, während die erste Belüftungsöffnung (31) derart bereitgestellt ist, dass sie an einer oberen Endbereichsseite angeordnet ist.

## Revendications

1. Structure de cadre assemblé soudé creux, dans laquelle le cadre est celui d'un véhicule du type à selle, comprenant une pluralité d'éléments tubulaires creux qui sont assemblés d'une seule pièce en les raccordant mutuellement par soudage, dans laquelle :
lesdits éléments creux comprennent au moins un premier élément creux (17), un deuxième élément creux (21) et un troisième élément creux (18) ;
ledit premier élément creux (17) est fermé à l'une de ses extrémités et présente un trou (30) communiquant avec l'air atmosphérique qui est ménagé sur l'autre portion d'extrémité de manière à permettre la communication entre un espace interne creux (17S) et l'air atmosphérique ;
ledit deuxième élément creux (21) est soudé à l'une de ses extrémités à une face latérale dudit premier élément creux (17) de sorte que ledit deuxième élément creux (21) s'appuie sur la face latérale dudit premier élément creux (17) et soit raccordé en état de communication avec un premier orifice d'aération (31) ménagé dans la région où ledit premier élément creux (17) et ledit deuxième élément creux (21) sont raccordés de manière à permettre aux espaces creux (17S, 21S) dudit premier élément creux (17) et dudit deuxième élément creux (21) de communiquer l'un avec l'autre ;
ledit troisième élément creux (18) est fermé à ses deux extrémités et présente une face latérale à laquelle l'autre extrémité dudit deuxième élément creux (21) est soudée de sorte que ladite autre extrémité dudit deuxième élément creux (21) s'appuie sur la face latérale dudit troisième élément creux (18) et soit raccordé en état de communication avec un deuxième orifice d'aération (32) qui est ménagé dans la région où ledit deuxième élément creux (21) et ledit troisième élément creux (18) sont raccordés afin de permettre aux espaces creux (18S, 21S) dudit troisième élément creux (18) et dudit deuxième élément creux (21) de communiquer l'un avec l'autre ;
ledit premier orifice d'aération (31) et ledit deuxième orifice d'aération (32) se présentent sous la forme de trous qui sont dissimulés par le deuxième élément creux (21) soudé aux ouvertures sur lesquelles il s'appuie de manière à ne pas être observées de l'extérieur ; et
ledit premier orifice d'aération (31) est ménagé dans une position espacée d'une distance prédéterminée dudit trou (30) communiquant avec l'air atmosphérique dans la direction longitudinale dudit premier élément creux (17).

2. Structure de cadre assemblé soudé creux selon la revendication 1, dans laquelle :
ladite Structure de cadre assemblé soudé creux comprend un cadre principal (7) qui s'étend vers l'arrière d'une portion supérieure d'un tube de tête (5) comme on peut l'observer en élévation latérale d'un véhicule du type à selle dans lequel ladite structure de cadre est utilisée ;
ledit cadre principal (7) comprend un cadre supérieur (18) et un cadre inférieur (17) aménagés en relation d'espacement vertical l'un avec l'autre et une pluralité de cadres de renfort formés chacun à partir d'un élément creux et raccordant ledit cadre supérieur et ledit cadre inférieur l'un à l'autre ;
ledit cadre inférieur (17) sert de premier élément creux et présente le trou (30) communiquant avec l'air atmosphérique ménagé dans sa portion d'extrémité inférieure ;
ledit cadre supérieur (18) sert de troisième élément creux ;
ledit premier cadre de renfort (21) qui est positionné le plus près dudit tube de tête (5) d'entre les cadres de renfort sert de deuxième élément creux ;
ledit cadre inférieur (17) et ledit premier cadre de renfort (21) sont raccordés en état de communication l'un avec l'autre à travers ledit premier orifice d'aération (31) ; et
ledit cadre supérieur (18) et ledit premier cadre de renfort (21) sont raccordés en état de communication l'un avec l'autre à travers ledit deuxième orifice d'aération (32).

3. Structure de cadre assemblé soudé creux selon la revendication 2, dans lequel lesdits cadres de renfort comprennent un deuxième cadre de renfort (22) qui est disposé à l'arrière dudit premier cadre de renfort (21), est raccordé à l'une de ses extrémités audit cadre inférieur (17) dans un état de non-communication entre ledit orifice (30) communiquant avec l'air atmosphérique et ledit premier orifice d'aération (31) et est raccordé à son autre extrémité audit cadre supérieur (18) en état de communication.

4. Structure de cadre assemblé soudé creux selon la revendication 2 ou la revendication 3, dans laquelle lesdits cadres de renfort comprennent un troisième cadre de renfort (23) et un quatrième cadre de renfort (24) qui sont disposés à l'arrière dudit premier cadre de renfort (21), le troisième cadre de renfort (23) et le quatrième cadre de renfort (24) étant raccordés à leurs premières extrémités respectives audit cadre inférieur (17) en état de non-communication entre ledit trou (30) communiquant avec l'air atmosphérique et ledit premier orifice d'aération (31), et ledit troisième cadre de renfort (23) et ledit quatrième cadre de renfort (24) étant raccordés à leur secondes extrémités respectives l'un à l'autre en état de communication et étant en outre raccordés audit cadre supérieur (18) en état de communication à travers un cinquième élément creux (25), qui est un élément creux différent.

5. Structure de cadre assemblé soudé creux selon l'une quelconque des revendications 2 à 4, dans laquelle une portion d'extrémité inférieure dudit cadre inférieur (17) est raccordée à une suspension de moteur (11) de forme cylindrique s'étendant latéralement et ledit trou (30) communiquant avec l'air atmosphérique est formé dans une portion cylindrique (11a) de ladite suspension de moteur (11).

6. Structure de cadre assemblé soudé creux selon l'une quelconque des revendications 2 à 5, dans laquelle il est prévu une paire de cadres principaux de gauche et de droite (7) qui sont raccordés et intégrés par ledit tube de tête (5) et sont raccordés l'un à l'autre en état de non-communication, et
chacun desdits cadres principaux de gauche et de droite (7) comprend un dit trou (30) communiquant avec l'air atmosphérique.

7. Structure de cadre assemblé soudé creux selon la revendication 6, dans laquelle le cadre assemblé soudé creux comprend des traverses creuses (28, 29) s'étendant dans la direction latérale pour raccorder lesdits cadres principaux de gauche et de droite jumelés (7) l'un à l'autre, et
lesdites traverses sont raccordées à l'une de leurs extrémités en état de communication et sont raccordées à leur autre extrémité en état de non-communication auxdits cadres principaux de gauche et de droite jumelés (7).

8. Cadre assemblé soudé creux selon la revendication 7, dans lequel lesdites traverses comprennent une première traverse (28) et une deuxième traverse (29) verticalement espacées l'une de l'autre ;
ladite première traverse (28) raccorde les cadres inférieurs de gauche et de droite (17) l'un à l'autre ; et
ladite deuxième traverse (29) raccorde les cadres supérieurs de gauche et de droite (18) l'un à l'autre.

9. Cadre assemblé soudé creux selon l'une quelconque des revendications 1 à 8, dans lequel :
ladite structure de cadre assemblé soudé creux est revêtue en l'immergeant dans une peinture liquide (42) après assemblage par soudage ;
au cours de la peinture, ledit premier élément creux (17) est disposé au-dessus d'une surface liquide (43) de la peinture de sorte que sa direction longitudinale soit dirigée dans une direction généralement verticale ; et,
dans cet état, ledit trou (30) communiquant avec l'air atmosphérique est ouvert généralement vers le bas dans sa portion d'extrémité inférieure, tandis que ledit premier orifice d'aération (31) est ménagé de manière à être positionné sur un côté de la portion d'extrémité supérieure.
